Europäisches Patentamt

(19) European Patent Office

Office européen des brevets

(11) Numéro de publication: **0 133 829**
**B1**

(12) # FASCICULE DE BREVET EUROPEEN

(45) Date de publication du fascicule du brevet:
16.09.87

(51) Int. Cl.⁴: **B 60 G 21/04,** B 60 G 11/18

(21) Numéro de dépôt: **84401558.6**

(22) Date de dépôt: **25.07.84**

(54) **Suspension arrière à roues indépendantes.**

(30) Priorité: **10.08.83 FR 8313149**

(43) Date de publication de la demande:
**06.03.85 Bulletin 85/10**

(45) Mention de la délivrance du brevet:
**16.09.87 Bulletin 87/38**

(84) Etats contractants désignés:
**AT BE CH DE GB IT LI NL SE**

(56) Documents cités:
**DE - A - 2 425 740**
**DE - A - 2 447 831**
**DE - A - 2 651 432**
**DE - A - 2 740 948**
**DE - B - 2 735 939**
**FR - A - 2 269 429**
**FR - A - 2 292 603**
**FR - A - 2 486 461**
**US - A - 4 165 099**

(73) Titulaire: **REGIE NATIONALE DES USINES RENAULT,**
**Boîte postale 103 8-10 avenue Emile Zola,**
**F-92109 Boulogne-Billancourt (FR)**

(72) Inventeur: **Jullien, Michel, 4, Mail des Thuyas,**
**F-78180 Montigny le Bretonneux (FR)**

(74) Mandataire: **Réal, Jacques et al, Régie Nationale des**
**Usines Renault SCE 0804, F-92109 Boulogne Billancourt**
**Cedex (FR)**

## Description

La présente invention se rapporte à une suspension arrière à roues indépendantes, notamment du type à bras tirés et à barres de torsion, telle que décrite dans le préambule de la revendication 1.

On connaît déjà des suspensions de ce type, par exemple telles que décrites dans le brevet français FR-A-2486461 déposé par la demanderesse.

Le dispositif concerné est constitué par un profil en L réunissant les bras de roues par leurs extrémités opposées aux fusées et disposé sensiblement en dessous de ces derniers, ainsi que par deux barres logées dans le profil précédent, réunies en leur milieu par une jumelle de jonction, par leurs extrémités libres respectivement à la caisse du véhicule pour l'une et aux bras de suspension pour l'autre.

Ce type de suspension, qui est intéressant en particulier au niveau de son poids, ne donne cependant pas entièrement satisfaction dans certaines configurations du véhicule. Ainsi, lorsqu'il se trouve en situation de dévers, la roue extérieure au virage subit une variation, vers l'ouverture donnant au train, des caractéristiques survireuses plutôt défavorable dans le cas d'une traction avant.

De même, la longueur et la position des ailes du profil en L tel que décrit dans le brevet ci-dessus n'optimisent pas la raideur de pince et d'ouverture du train sous effort de ripage, ce qui peut se traduire par une insuffisance de comportement en appui et en guidage longitudinal du véhicule en virage et donc de tenue de cap.

Le train arrière de suspension selon la présente invention a pour but de pallier les inconvénients ci-dessus.

Il a pour avantage de posséder une géométrie particulièrement adaptable aux caractéristiques propres du train avant et du véhicule dans son ensemble (poids, inertie, empattement, etc.). Ainsi, un véhicule à traction avant, possédant un train avant du type Mac Pherson sur-vireur, ou légèrement sous-vireur, exige pour être globalement sous-vireur, optimisant ainsi ses caractéristiques routières, d'être pourvu d'un train arrière ayant une géométrie sous-vireuse.

Un autre avantage du train arrière selon l'invention réside dans a raideur remarquable aux déformations élastiques vers la pince ou l'ouverture sous effort de ripage. Ceci est obtenu au moyen d'une réalisation industrielle aisée, et à l'aide de liaisons dont le poids est limité au maximum.

Les avantages ce-dessus résultent du remplacement dans le train décrit dans le brevet FR-A-2486461 du profil de liaison en L réunissant les bras de suspension, par un profil ouvert en V, de faible raideur en torsion, mais dont toutes les sections restent dans les plans parallèles au cours du mouvement de torsion.

Le profil ce-dessus est caractérisé par le fait que le sommet du profil, en V, est situé sensiblement dans le plan contenant les bras, et se trouve orienté de telle façon que le plan contenant les grands axes de l'ellipse centrale d'inertie de ses différentes sections rencontre le sol selon une trace à proximité du point de contact des roues arrières et du sol.

L'invention sera décrite au regard des figures 1 à 3 ci-jointes, qui se rapportent respectivement:
 – la figure 1, à une vue en perspective d'un train de roues arrières;
 – la figure 2, à une vue de côté, schématique, montrant la disposition théorique d'un élément de l'invention;
 – la figure 3, à une vue en perspective, représentant le détail de la réalisation pratique de l'élément précédent.

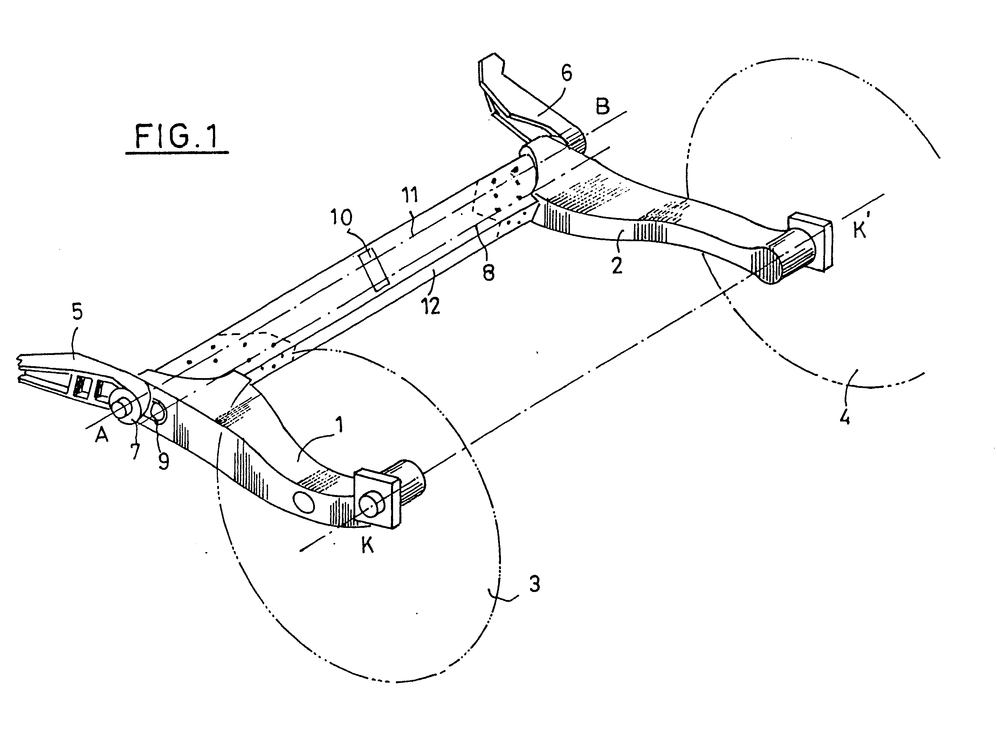

En référence à la figure 1, on voit que le train arrière selon l'invention comporte des bras tirés 1 – 2 supportant les roues 3 – 4 et fixés par leurs extrémités opposées à des paliers latéraux 5 – 6 solidaires de la caisse du véhicule par l'intermédiaire d'articulations élastiques telles que 7.

Les bras 1 et 2 sont reliés entre eux par une barre 8 dont les extrémités 9 leur sont solidarisées, et dont la partie médiane comporte une jumelle 10 qui la réunit à une seconde barre 11 ancrée aux supports 5 – 6. Un profil 12 en V est fixé par ses extrémités aux bras 1 – 2 et recouvre les barres 8 – 11.

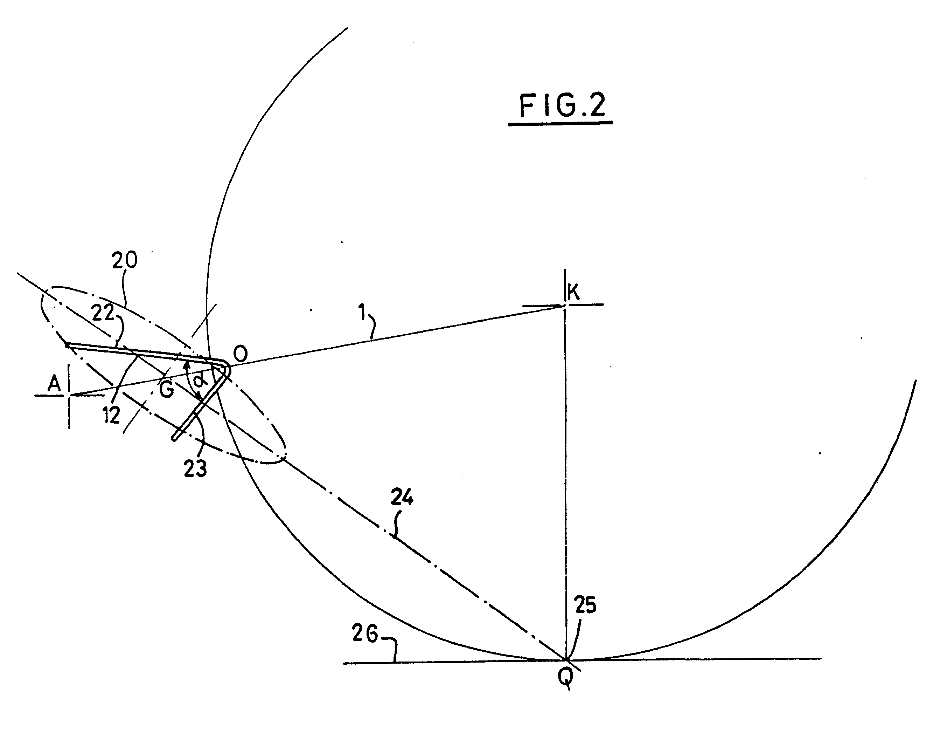

L'orientation et le positionnement du profil 12, fondamentaux pour la réalisation de l'invention, sont schématisés à la figure 2. Le bras 1 supporte la roue 3 au point K et tourne autour du point A, axe de rotation de la barre 11. Le point de contact de la roue 3 avec le sol s'effectue en Q.

Le positionnement du sommet O du V du profil 12 se fait sensiblement dans le plan déterminé par les bras 1 – 2.

En ce qui concerne l'orientation du profil 12, elle découle de son ellipse centrale d'inertie 20 que l'on trace pour une section de ce profil, à la fois perpendiculaire à l'axe 21 de sa pliure et à la surface de ses ailes 22 – 23.

Le grand axe 24 de l'ellipse centrale d'inertie (20) de la section considérée rencontre le sol en un point 25; le profil 12 est correctement positionné selon l'invention lorsque le plan contenant les grands axes 24 de l'ellipse centrale d'inertie des différentes sections du profil 12 rencontre le sol 26 selon une trace 25 passant sensiblement par les points Q de contact des roues 3 – 4 avec le sol 26. Cette disposition particulière assure au train une grande rigidité de dérive et ce avec un profil optimisé de faible épaisseur et donc de faible poids.

De la même façon, la raideur de carrossage ou de contre-carrossage sous les efforts transversaux reste à un niveau remarquablement élevé.

Naturellement, les paramètres géométriques et mécaniques du profil 12 sont variables selon les dimensions et le poids du véhicule considéré.

Les calculs de résistance des matériaux usuels combinés avec les conditions précédentes de positionnement et d'orientation du profil 12, en fonction de l'emplacement spécifique des grands axes de l'ellipse centrale d'inertie dudit profil 12, permettent la détermination de l'épaisseur correspondante de la tôle, les dimensions des ailes 22 – 23 et l'angle $\alpha$ qu'elles déterminent.

C'est ainsi, qu'à titre d'exemple, un profil 12 destiné à la suspension arrière d'un véhicule de gamme moyenne possède les caractéristiques suivantes:

- épaisseur de tôle HSLA = 3 mm
- distance du sommet O du profil à l'axe de rotation A = 125 mm
- longueur totale du bras = 360 mm
- rayon de la roue = 258 mm
- longueur de l'aile 22 = 125 mm
- longueur de l'aile 23 = 74 mm
- angle α = 57° 30
- inclinaison de l'aile 22 par rapport au bras AK = 17°

Avec la configuration ce-dessus, la trace du plan contenant le grand axe de l'ellipse centrale d'inertie de chaque section du profil 12 coupe effectivement le plan de la route suivant une droite située à proximité du point Q, et ce, dans toutes les circonstances de roulage.

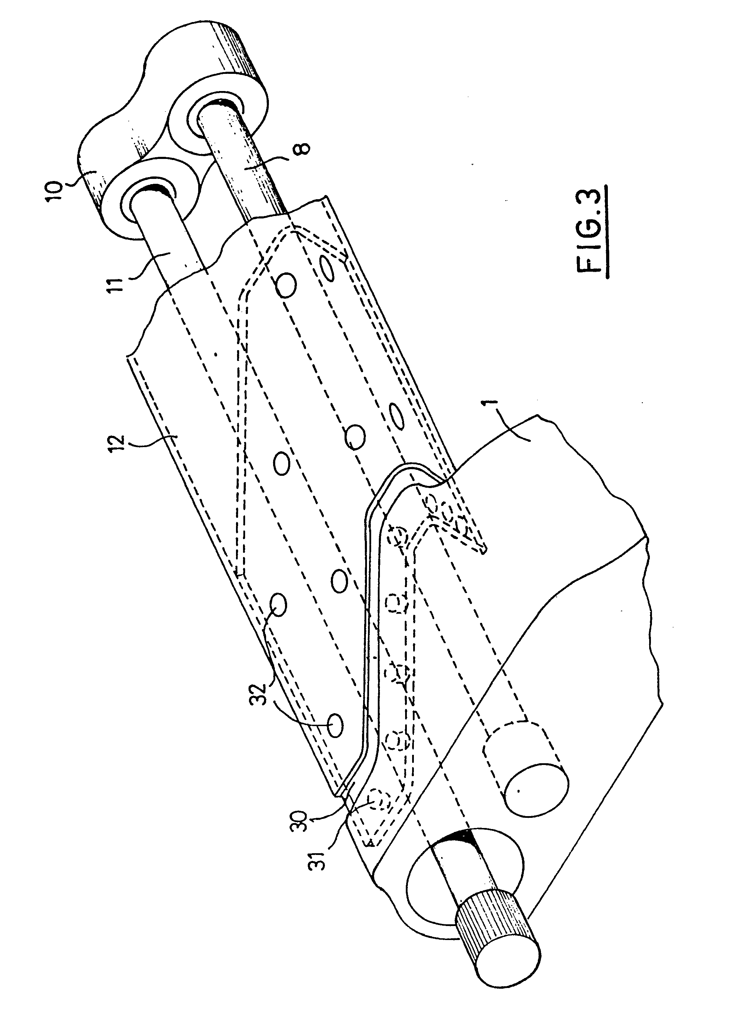

Une forme de fixation du profil 12 sur les bras 1 – 2 est illustrée en détail à la figure 3.

Les bras 1 – 2 sont de préférence en fonte moulée et comportent un élément 30 en forme de V, de faible longueur qui, après positionnement adéquat, leur est inséré perpendiculairement et solidarisé lors de leur moulage, notamment par des inclusions 31 qui les traversent.

Sur ces éléments 30 reposent les extrémités du profilé 12, qui leurs sont fixés par des points de soudure 32 ou des cordons non figurés.

On retrouve les barres 8 – 11 de la figure 1 qui jouent à la fois le rôle de barre de suspension et anti-dévers, solidarisées en leur milieu par la jumelle 10 et par leurs extrémités respectivement aux bras 1 – 2 et aux paliers latéraux 5 – 6.

L'amortissement, non figuré, est obtenu par tout moyen antérieur tel que des amortisseurs télescopiques dont la partie inférieure repose sur les extrémités des bras 1 – 2 à proximité des axes de roues; ils peuvent être horizontaux ou verticaux, hydrauliques ou à gaz. On ne sortirait par ailleurs pas de la présente invention en utilisant des ressorts hélicoïdaux comme moyens de suspension à la place des barres de torsion ou en utilisant des bras en tôle ou en tube au lieu de fonte.

## Revendications

1. Suspension arrière à roues indépendantes, notamment pour véhicule automobile, du type à bras tirés, comportant un profil (12) réunissant les bras de roues par leurs extrémités opposées aux fusées, deux barres (8, 11) logées dans le profil précédent, réunies en leur milieu par une jumelle (10) et par leurs extrémités libres respectivement à la caisse pour l'une et aux bras pour l'autre, caractérisée par le fait que le sommet du profil (12), en V, est situé sensiblement dans le plan contenant les bras (1 – 2), et se trouve orienté de telle façon que le plan contenant les grands axes (24) de l'ellipse centrale d'inertie (20) de ses différentes sections rencontre le sol (26) selon une trace (25) passant à proximité du point de contact des roues arrières et du sol.

2. Suspension arrière selon la revendication 1, caractérisée en ce que le bras (1 – 2) sont en fonte moulée et comportent chacun un élément (30) en forme de V, de faible longueur qui, après positionnement adéquat, leur sont solidarisés lors de leur moulage, notamment au moyen d'inclusions de fonte (31) traversant des ouvertures prévues à cet effet dans lesdits éléments (30).

3. Suspension arrière selon les revendications 1 et 2, caractérisée en ce que le profil (12) en V est positionné de manière à ce que ses extrémités recouvrent les éléments (30) de forme correspondante et leurs soient fixés par soudure.

## Patentansprüche

1. Unabhängige Hinterradaufhängung, insbesondere für Kraftfahrzeuge vom Typ mit gezogenen Lenkern, die ein Profil (12) aufweist, das die Radlenker an ihren den Achsschenkeln gegenüberliegenden Enden vereinigt sowie zwei Stäbe (8, 11), die in dem genannten Profil angeordnet sind und die in ihrer Mitte durch eine Spannlasche (10) verbunden sind und deren freie Enden zum einen mit der Karosserie und zum anderen mit den Lenkern verbunden sind, dadurch gekennzeichnet, dass die V-förmige Spitze des Profils (12) im wesentlichen in der die Lenker (1, 2) aufnehmenden Ebene angeordnet ist und derart ausgerichtet ist, dass die die grossen Achsen (24) der zentralen Trägheitsellipse (20) ihrer einzelnen Abschnitte enthaltende Ebene den Boden (26) entlang einer Linie (25) schneidet, die in der Nähe der Berührungsstelle der Hinterräder mit dem Boden verläuft.

2. Hinterradaufhängung nach Anspruch 1, dadurch gekennzeichnet, dass die Lenker (1, 2) aus Gusseisen sind und jeweils ein V-förmiges Bauteil (30) aufweisen von geringer Länge, das nach entsprechender Positionierung mit ihnen während des Giessvorgangs fest verbunden wird, insbesondere durch das Eindringen von Giessmetall (31) durch zu diesem Zweck vorgesehene Öffnungen in die Bauteile (30).

3. Hinterradaufhängung nach Ansprüchen 1 und 2, dadurch gekennzeichnet, dass das V-förmige Profil (12) derart angeordnet ist, dass seine Enden die in der Form angepassten Bauteile (30) bedekken und mit ihnen verschweisst sind.

## Claims

1. An independent rear suspension, in particular for a motor vehicle, of the type comprising trailing arms, comprising a member (12) which connects the trailing arms by way of the ends thereof which are remote from the stub axles, two bars (8, 11) housed in said member and connected at their centre by a yoke (10) and by way of their respective free ends to the body and to the respective arms, characterised in that the apex of the member (12), which is of a V-shaped configuration, is disposed substantially in the plane containing the arms (1, 2) and is oriented in such a way that the plane containing the major axes (24) of the central ellipse of inertia (20) of its different sections meets the ground (26) along a line (25) passing in the vicinity of the point of contact between the rear wheels and the ground.

2. A rear suspension according to claim 1 characterised in that the arms (1, 2) are of cast iron and each comprise a V-shaped element (30) of small length which, after suitable positioning, are secured with respect thereto upon casting thereof, in particular by means of cast iron inclusions (31) passing through openings provided for that purpose in said elements (30).

3. A rear suspension according to claims 1 and 2 characterised in that the V-shaped member (12) is so positioned that the ends thereof cover the elements (30) of corresponding shape and are fixed thereto by welding.

FIG.1

013 3829

FIG.2

FIG.3

0133829